(19) **Europäisches Patentamt / European Patent Office / Office européen des brevets**

(11) **EP 4 745 200 A1**

(12) **EUROPEAN PATENT APPLICATION**
published in accordance with Art. 153(4) EPC

(43) Date of publication:
**20.05.2026 Bulletin 2026/21**

(21) Application number: **24854208.6**

(22) Date of filing: **13.08.2024**

(51) International Patent Classification (IPC):
**C08L 101/14** (2006.01)  **A62D 1/00** (2006.01)
**C08F 2/44** (2006.01)  **C08K 3/013** (2018.01)
**C08K 5/49** (2006.01)  **C08L 47/00** (2006.01)
**C08L 101/00** (2006.01)  **C09D 5/18** (2006.01)
**C09D 7/65** (2018.01)  **C09K 21/12** (2006.01)
**H01M 50/121** (2021.01)  **H01M 50/143** (2021.01)
**H01M 50/202** (2021.01)  **H01M 50/204** (2021.01)
**H01M 50/293** (2021.01)  **H01M 50/414** (2021.01)
**H01M 50/443** (2021.01)  **H01M 50/483** (2021.01)
**H01M 50/486** (2021.01)

(52) Cooperative Patent Classification (CPC):
**A62D 1/00; C08F 2/44; C08K 3/013; C08K 5/49;
C08L 47/00; C08L 101/00; C08L 101/14;
C09D 5/18; C09D 7/65; C09K 21/12; H01M 50/121;
H01M 50/143; H01M 50/202; H01M 50/204;
H01M 50/293;** (Cont.)

(86) International application number:
**PCT/JP2024/028929**

(87) International publication number:
**WO 2025/037619 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023   JP 2023132173
25.09.2023   JP 2023161502**

(71) Applicant: **Mitsui Chemicals, Inc.
Tokyo 104-0028 (JP)**

(72) Inventors:
• **SEO, Akiko
  Sodegaura-shi, Chiba 299-0265 (JP)**
• **HASHIMOTO, Toshiya
  Sodegaura-shi, Chiba 299-0265 (JP)**

• **YOSHIMURA, Toshihiro
  Sodegaura-shi, Chiba 299-0265 (JP)**
• **KAGAWA, Yasuyuki
  Sodegaura-shi, Chiba 299-0265 (JP)**
• **ANDO, Kazuhiro
  Sodegaura-shi, Chiba 299-0265 (JP)**
• **SUGIHARA, Yuri
  Sodegaura-shi, Chiba 299-0265 (JP)**
• **MIZUNO, Yu
  Sodegaura-shi, Chiba 299-0265 (JP)**
• **FANG, Nan
  Sodegaura-shi, Chiba 299-0265 (JP)**

(74) Representative: **Hoffmann Eitle
Patent- und Rechtsanwälte PartmbB
Arabellastraße 30
81925 München (DE)**

(54) **FLAME RETARDANT-CONTAINING PARTICLE, RESIN COMPOSITION, FIRE-EXTINGUISHING SHEET, AND APPLICATION THEREOF**

(57) A flame retardant-containing particle is a particle (C) obtained by polymerizing two or more types of a monomer (A) having a polymerizable unsaturated double bond, in a composition containing the two or more types of the monomer (A) and a phosphorus-based flame retardant (B) dissolved in at least part of the two or more types of the monomer (A). The particle (C) includes a resin layer (D) formed by polymerizing the two or more types of the monomer (A), and an elution rate of the resin layer (D) in an electrolytic solution is 40 mass% or less.

(52) Cooperative Patent Classification (CPC): (Cont.)
**H01M 50/414; H01M 50/443; H01M 50/483;
H01M 50/486;** Y02E 60/10

**Description**

Technical Field

The present disclosure relates to a flame retardant-containing particle, a resin composition, a fire-extinguishing sheet, and application thereof.

Background Art

Conventionally, a lithium ion secondary battery has attracted attention because of its high energy density and high output characteristics. In particular, in a power source of an electric vehicle, a large storage battery, and the like, a lithium ion secondary battery stack having a stack structure in which a plurality of lithium ion secondary batteries are stacked directly or via another layer is adopted.

Since a lithium ion secondary battery has a high energy density and high output characteristics, when an internal short circuit occurs, a large current flows and rapid heat generation occurs, and in the worst case, lithium may be ignited.

As a method of preventing ignition, there is a method that uses a fire extinguishing agent-containing particle in which a fire extinguishing agent is enclosed in a resin layer. For example, Japanese Patent No. 5374309 proposes a fire extinguishing agent-containing particle in which a fire extinguishing agent is enclosed in a resin layer, in which the resin layer is formed of a resin containing from 0.1 to 30 wt% of a component derived from a crosslinkable monomer and from 70 to 99.9 wt% of a component derived from a radically polymerizable monomer, and the fire extinguishing agent is a fire extinguishing agent having a trifluoromethyl group and a boiling point of from 45 to 300°C.

Further, Japanese Patent Application Laid-Open (JP-A) No. 2021-118847 proposes a fire extinguishing sheet that can be used in a place, a facility, a structure, or the like where a fire may occur and that has an initial fire extinguishing function. The fire extinguishing sheet described in JP-A No. 2021-118847 includes a fire extinguishing agent that is thermally decomposed to generate a fire extinguishing component when a predetermined temperature is reached, and a fire extinguishing function is exhibited by generating an aerosol by thermal decomposition.

In addition, JP-A No. 2020-130661 proposes a chemical fire extinguishing agent sheet capable of extinguishing fire by automatic initial fire extinguishment at an ignition point. The chemical fire extinguishing agent sheet of JP-A No. 2020-130661 is a fire extinguishing sheet that detects a fire and automatically ejects a fluorocarbon-based fire extinguishing agent.

SUMMARY OF INVENTION

Technical Problem

In the fire extinguishing agent-containing particle of Japanese Patent No. 5374309, a fire extinguishing agent having a low boiling point such as 1,1,2,2-tetrafluoroethyl-2,2,2-trifluoroethyl ether (boiling point: 56°C) is used, and there is a problem that the fire extinguishing agent is likely to evaporate. Therefore, in Japanese Patent No. 5374309, it is desirable to adopt pressure polymerization for the purpose of suppressing evaporation of a fire extinguishing agent at the time of producing the fire extinguishing agent-containing particle, and there is a problem that the polymerization method is limited. Therefore, it is desirable to prepare the fire extinguishing agent-containing particle using a fire extinguishing agent (for example, a flame retardant) whose polymerization method is not limited. Furthermore, it is desirable to adopt a monomer formulation capable of preparing a fire extinguishing agent-containing particle even when such a fire extinguishing agent is used.

In addition, a resin layer covering at least part of a fire extinguishing agent (for example, a flame retardant) may be used in a state of being in contact with an electrolytic solution of a secondary battery or the like. Therefore, a material capable of forming a resin layer whose elution in an electrolytic solution is suppressed is desirable.

Next, the fire extinguishing sheet described in JP-A No. 2021-118847 contains a fire extinguishing agent that is thermally decomposed to generate a fire extinguishing component when a predetermined temperature is reached, and specifically, thermal energy is generated by combustion of a chlorate salt of component B, which is a strong oxidizing agent, and a potassium salt of component C, thereby generating an aerosol, which is a fire extinguishing component. In JP-A No. 2021-118847, it is necessary to generate thermal energy for generation of the aerosol, which may promote ignition due to, for example, thermal runaway of a secondary battery.

In the fire extinguishing sheet described in JP-A No. 2020-130661, a fluorocarbon-based fire extinguishing agent is dispersed as droplets in a fire extinguishing sheet made of a synthetic resin. In JP-A No. 2020-130661, a synthetic resin is plasticized at around 80°C, and the fluorocarbon-based fire extinguishing agent may be eluted from the fire extinguishing sheet. Therefore, the fluorocarbon-based fire extinguishing agent may be eluted from the fire extinguishing sheet in a usage temperature range (for example, from 45°C to 80°C) of a secondary battery.

In view of the above circumstances, an object of a first aspect of the disclosure is to provide a flame retardant-containing particle that is formed using a flame retardant whose polymerization method is not limited and that includes a resin layer whose elution in an electrolytic solution is suppressed, a resin composition capable of forming a resin layer whose elution in an electrolytic solution is suppressed, and the like.

In view of the above circumstances, an object of a second aspect of the disclosure is to provide a fire-extinguishing sheet capable of suppressing ignition due to, for example, thermal runaway of a secondary battery, and the like.

Solution to Problem

Means for solving the problem include the following embodiments.

<1A> A flame retardant-containing particle, which is a particle (C) obtained by polymerizing two or more types of a monomer (A) having a polymerizable unsaturated double bond, in a composition containing the two or more types of the monomer (A) and a phosphorus-based flame retardant (B) dissolved in at least part of the two or more types of the monomer (A),
in which the particle (C) includes a resin layer (D) formed by polymerizing the two or more types of the monomer (A), and an elution rate of the resin layer (D) in an electrolytic solution is 40 mass% or less.
<2A> The flame retardant-containing particle according to <1A>, in which the resin layer (D) covers at least part of the phosphorus-based flame retardant (B).
<3A> A polymerizable resin composition, containing from 70 mass% to less than 99 mass% of a monomer (1) in which a phosphorus-based flame retardant (B) is dissolvable, in which

a content of a monomer (2) having an acidic group is from 0 mass% to 10 mass%,
a content of a monomer (3) other than the monomer (1) and the monomer (2) is from 0 mass% to 25 mass%, and
a proportion of methyl methacrylate contained in the monomer (1) is 50 mass% or less with respect to a total amount of the monomer (1).

<4A> The resin composition according to <3A>, in which the resin composition is used for forming a resin layer (D) covering at least part of the phosphorus-based flame retardant (B).
<5A> The resin composition according to <3A> or <4A>, in which the monomer (1) is at least one type selected from the group consisting of acrylonitrile, methyl methacrylate, butyl methacrylate, and styrene.
<6A> The resin composition according to any one of <3A> to <5A>, in which the monomer (2) is at least one type selected from the group consisting of methacrylic acid and acrylic acid.
<7A> The resin composition according to any one of <3A> to <6A>, in which the monomer (3) contains one polymerizable unsaturated double bond.
<8A> A flame retardant-containing particle, including:

the phosphorus-based flame retardant (B); and
a resin layer (D) that is formed from the resin composition according to any one of <3A> to <7A> and that covers at least part of the phosphorus-based flame retardant (B).

<9A> A flame retardant coating material, including the flame retardant-containing particle according to any one of <1A>, <2A>, and <8A>.
<10A> A laminated body, including the flame retardant-containing particle according to any one of <1A>, <2A>, and <8A>.
<11A> A method of producing a flame retardant-containing particle, the method including:

a step of preparing a mixed liquid containing the resin composition according to any one of <3A> to <7A> and the phosphorus-based flame retardant (B); and
a step of forming a resin layer (D) by polymerizing the monomer (A) in the mixed liquid.

<12A> The method of producing a flame retardant-containing particle according to <11A>, in which the resin layer (D) covers at least part of the phosphorus-based flame retardant (B).
<13A> The method of producing a flame retardant-containing particle according to <11A> or <12A>, in which the resin layer (D) is formed.
<1B> A fire-extinguishing sheet, including:

EP 4 745 200 A1

a substrate layer; and

a self-extinguishing layer including fire extinguishing agent-carrying particles that include a fire extinguishing agent and a resin layer covering at least part of the fire extinguishing agent.

<2B> The fire-extinguishing sheet according to <1B>, in which the self-extinguishing layer further contains a water-soluble resin and a binder, and

a content of the fire extinguishing agent-carrying particles is from 50 mass% to 80 mass% with respect to a total amount of the self-extinguishing layer.

<3B> The fire-extinguishing sheet according to <1B> or <2B>, in which the self-extinguishing layer further contains an inorganic filler.

<4B> The fire-extinguishing sheet according to any one of <1B> to <3B>, in which the fire extinguishing agent contains a phosphorus-based flame retardant.

<5B> The fire-extinguishing sheet according to <4B>, in which a content of the phosphorus-based flame retardant is from 50 mass% to 100 mass% with respect to a total amount of the fire extinguishing agent.

<6B> The fire-extinguishing sheet according to any one of <1B> to <5B>, in which the substrate layer contains at least one type of resin selected from the group consisting of aluminum, copper, polyolefin, polyester, polyphenylene sulfide, polyether ether ketone, polyamideimide, and polytetrafluoroethylene, and a flame retardant.

<7B> The fire-extinguishing sheet according to any one of <1B> to <6B>, in which the substrate layer contains a flame retardant.

<8B> A secondary battery, comprising the fire-extinguishing sheet according to any one of <1B> to <7B>, a positive electrode, a negative electrode, a separator disposed between the positive electrode and the negative electrode, and a nonaqueous electrolytic solution, in which the fire-extinguishing sheet is disposed inside or outside a battery packaging material.

<9B> A method of producing a fire-extinguishing sheet, including a step of applying an aqueous composition including fire extinguishing agent-carrying particles that include a fire extinguishing agent and a resin layer covering at least part of the fire extinguishing agent to a substrate layer.

<10B> A method of releasing a fire extinguishing agent, including a step of allowing the fire extinguishing agent-carrying particles included in the fire-extinguishing sheet according to any one of <1B> to <7B> to undergo morphological change at a temperature between 110°C and 180°C, and a step of releasing a fire extinguishing agent from the fire extinguishing agent-carrying particles.

Advantageous Effects of Invention

According to the first aspect of the disclosure, a flame retardant-containing particle that is formed using a flame retardant whose polymerization method is not limited and that includes a shell layer whose elution in an electrolytic solution is suppressed, a resin composition capable of forming a shell layer whose elution in an electrolytic solution is suppressed, and the like are provided.

According to the second aspect of the disclosure, a fire-extinguishing sheet capable of suppressing ignition due to, for example, thermal runaway of a secondary battery, and the like are provided.

DESCRIPTION OF EMBODIMENTS

In the disclosure, a numerical range indicated using "to" means a range including numerical values described before and after "to" as a lower limit value and an upper limit value, respectively.

In the numerical ranges described in stages in the disclosure, the upper limit value or the lower limit value described in one numerical range may be replaced with the upper limit value or the lower limit value of a numerical range described in another stage. In addition, in a numerical range described in the disclosure, the upper limit value or the lower limit value of the numerical range may be replaced with a value shown in an example.

In the disclosure, the term "step" includes not only an independent step but also a step that cannot be clearly distinguished from other steps as long as the intended purpose of the step is achieved.

In the disclosure, each component may contain a plurality of types of corresponding substances. When a plurality of types of substances corresponding to each component are present in the composition, the content or content amount of each component means the total content or content amount of the plurality of types of substances present in the composition unless otherwise specified.

[Flame Retardant-Containing Particle]

A flame retardant-containing particle of the disclosure is a particle (C) obtained by polymerizing two or more types of monomers (A) having a polymerizable unsaturated double bond in a composition containing the two or more types of monomers (A) and a phosphorus-based flame retardant (B) dissolved in at least part of the two or more types of monomers (A), and the particle (C) includes a resin layer (D) formed by polymerizing the two or more types of monomers (A), and an elution rate of the resin layer (D) in an electrolytic solution is 40 mass% or less.

The flame retardant-containing particle of the disclosure is formed using the phosphorus-based flame retardant (B) which is a flame retardant having no boiling point or having a high boiling point and the polymerization method thereof is not limited. The flame retardant-containing particle further includes a resin layer (D) whose elution in an electrolytic solution is suppressed. By including the resin layer (D) having an elution rate in an electrolytic solution of 40 mass% or less, when the flame retardant-containing particle is applied to a secondary battery, for example, when the flame retardant-containing particle is used as an outermost separator, a packaging material, or the like, adverse effects on battery characteristics can be reduced. Specifically, it is presumed that by suppressing elution of the resin layer (B) in the electrolytic solution, elution of the phosphorus-based flame retardant (B) is also suppressed, and thus battery characteristics are maintained.

The flame retardant-containing particle of the disclosure is a particle (C) obtained by polymerizing two or more types of monomers (A) in a composition containing two or more types of monomers (A) and a phosphorus-based flame retardant (B).

(Monomer (A))

The monomer (A) is a monomer having a polymerizable unsaturated double bond. The monomer (A) preferably contains a monomer (1) capable of dissolving the phosphorus-based flame retardant (B), and may contain or need not contain a monomer other than the monomer (1). Examples of the monomer other than the monomer (1) include a monomer (2) having an acidic group, and a monomer (3) other than the monomer (1) and the monomer (2).

Specific examples of the monomer (1), the monomer (2), and the monomer (3) are as described later, and preferred forms are also similar to those of the resin composition of the disclosure described later.

The content of the monomer (1) is preferably 70 mass% or more but less than 99 mass% with respect to the total amount of the monomer (A), and is preferably from 75 mass% to 97 mass%, and more preferably from 80 mass% to 95 mass% from the viewpoint that the elution rate in the electrolytic solution can be further suppressed.

The content of the monomer (2) is from 0 mass% to 5 mass%, preferably from 1 mass% to 5 mass%, and more preferably from 3 mass% to 5 mass% with respect to the total amount of the monomer (A).

The content of the monomer (3) is from 0 mass% to 25 mass%, preferably from 0 mass% to 20 mass%, and more preferably from 0 mass% to 10 mass% with respect to the total amount of the monomer (A).

The content of the monomer (A) contained in the composition used for preparing the particle (C) may be from 20 mass% to 80 mass%, from 30 mass% to 70 mass%, or from 40 mass% to 60 mass% with respect to the total amount of the composition.

(Phosphorus-based Flame Retardant (B))

The phosphorus-based flame retardant (B) is a flame retardant that contains a phosphorus element and is soluble in at least part of the two or more types of monomers (A).

Examples of the phosphorus-based flame retardant (B) include a phosphoric acid ester-based flame retardant and a condensed phosphoric acid ester-based flame retardant. Above all, a condensed phosphoric acid ester-based flame retardant is preferable.

As the phosphorus-based flame retardant (B), one type may be used singly or two or more types may be used in combination.

As the condensed phosphoric acid ester-based flame retardant, a commercially available product may be used, and examples thereof include ADK STAB FP-600, ADK STAB PFR, and ADK STAB FP-900L manufactured by ADEKA CORPORATION.

The content of the phosphorus-based flame retardant (B) contained in the composition used for preparing the particle (C) may be from 20 mass% to 80 mass%, from 30 mass% to 70 mass%, or from 40 mass% to 60 mass% with respect to the total amount of the composition.

The composition used for preparing the particle (C) may contain components (other components) other than the monomer (A) and the phosphorus-based flame retardant (B). Examples of other components include a polymerization initiator. Examples of the polymerization initiator include an azo-based polymerization initiator and a peroxide-based polymerization initiator.

Examples of the azo-based polymerization initiator include 2,2'-azobis(4-methoxy-2,4-dimethylvaleronitrile), 2,2'-azobisisobutyronitrile, 2,2-azobis(2,4-dimethylvaleronitrile), dimethyl 2,2'-azobis(2-methylpropionate), and 2,2'-azobis(2-methylbutyronitrile).

Examples of the peroxide-based polymerization initiator include dibenzoyl peroxide and dilauroyl peroxide.

The particle (C) as the flame retardant-containing particle of the disclosure is a particle obtained by polymerizing two or more types of monomers (A) in the composition. Examples of a method of polymerizing two or more types of monomers (A) include a method in which the composition is heated under conditions of from 40°C to 70°C (55°C in one example) and from 30 minutes to 5 hours (2 hours in one example). The pressure when two or more types of monomers (A) are polymerized is not particularly limited, and may be a normal pressure of from about 0.05 MPa to 0.15 MPa.

Furthermore, two or more types of monomers (A) may be polymerized by suspension polymerization to obtain the particle (C) as the flame retardant-containing particle of the disclosure.

The average particle diameter of the particle (C) may be less than 10 $\mu$m, 5 $\mu$m or less, or from 0.5 $\mu$m to 3 $\mu$m.

The average particle diameter of the particle (C) can be determined by measuring the particle diameter with a particle diameter analyzer (manufactured by MicrotracBEL Corp., MT3300EX II).

The particle (C) as the flame retardant-containing particle of the disclosure includes the resin layer (D) formed by polymerizing two or more types of monomers (A). The resin layer (D) preferably covers at least part of the phosphorus-based flame retardant (B). The resin layer (D) may be in a form that includes one core portion containing a flame retardant and covers at least part of the one core portion, or may be in a form that includes a plurality of core portions containing a flame retardant and covers at least some of the plurality of core portions. The core portion may be entirely covered with the resin layer (D), or partially covered with the resin layer (D) and the rest thereof may be exposed from the resin layer (D).

The elution rate of the resin layer (D) in the electrolytic solution is 40 mass% or less, preferably 30 mass% or less, more preferably 25 mass% or less, still more preferably 20 mass% or less, and particularly preferably 15 mass% or less.

The lower limit of the elution rate of the resin layer (D) in the electrolytic solution is not particularly limited as long as it is 0 mass% or more.

The elution rate of the resin layer (D) in the electrolytic solution means the elution rate of the resin layer (D) with respect to the electrolytic solution obtained by mixing ethylene carbonate, ethyl methyl carbonate, and diethyl carbonate at a mass ratio of 1:1:1. Specifically, the resin layer (D) or a sample having a resin formulation similar to that of the resin layer (D) is prepared, 0.5 parts by mass of the resin layer (D) or the sample is immersed in 10 parts by mass of the electrolytic solution at normal temperature, the electrolytic solution is filtered after immersion, and the elution amount in the electrolytic solution is calculated by weighing a residue obtained by drying the filtrate at 150°C for 3 hours. The elution rate can be calculated from the following formula from the elution amount in the electrolytic solution. The elution rate of the resin layer (D) in the electrolytic solution is a value calculated from the elution amount of the component included in the resin layer (D), and is a value not considering the elution amount of the flame retardant. Therefore, for example, the elution rate of the resin layer (D) in the electrolytic solution is determined from a sample having a resin formulation similar to that of the resin layer (D), or the elution rate of the resin layer (D) in the electrolytic solution is determined by subtracting the elution amount of the flame retardant from the total elution amount.

[Math. 1]

$$\text{Elution rate} = 1\,0\,0 - \frac{\text{Elution amount in electrolytic solution}}{0.5} \times 1\,0\,0$$

The flame retardant-containing particle of the disclosure may contain or need not contain a flame retardant other than the phosphorus-based flame retardant (B). For example, the content of the other flame retardants may be from 0 mass% to 10 mass% or from 0 mass% to 5 mass% with respect to the total amount of the phosphorus-based flame retardant (B) and the other flame retardants.

The flame retardant-containing particle of the disclosure can be applied to a member that can cause a fire due to high temperature. For example, the flame retardant-containing particle of the disclosure may be applied to a home appliance, a secondary battery, an automobile component, or the like.

The flame retardant-containing particle of the disclosure may be used, for example, for preparing the below-mentioned flame retardant coating material and laminated body.

The flame retardant-containing particle of the disclosure may be a particle that releases the phosphorus-based flame retardant (B) to the outside when specific conditions are satisfied.

For example, (1) the phosphorus-based flame retardant (B) may be released to the outside when the flame retardant-containing particle of the disclosure or a member including the flame retardant-containing particle is exposed to a specific temperature (for example, 60°C or higher);

(2) the phosphorus-based flame retardant (B) may be released to the outside when an impact is applied to the flame retardant-containing particle of the disclosure or a member including the flame retardant-containing particle; and
(3) the phosphorus-based flame retardant (B) may be released to the outside when the resin layer (D) contained in the flame retardant-containing particle of the disclosure undergoes alteration due to chemical change or the like.

[Flame Retardant Coating Material]

The flame retardant coating material of the disclosure includes the flame retardant-containing particles of the disclosure.

The flame retardant coating material may be used by application to a surface of a substrate or a member, or the like, and may be used for imparting fire resistance to a home appliance, a secondary battery, an automobile component, or the like.

The flame retardant coating material may contain a component other than the flame retardant-containing particles of the disclosure. Examples of the component other than the flame retardant-containing particles include a solvent, an inorganic material such as a pigment or a filler, and a binder component.

The flame retardant coating material may be, for example, a fire-extinguishing sheet including a substrate layer and a self-extinguishing layer including the flame retardant-containing particles of the disclosure.

[Fire-Extinguishing Sheet]

The fire-extinguishing sheet of the disclosure includes a substrate layer and a self-extinguishing layer including fire extinguishing agent-carrying particles that include a fire extinguishing agent and a resin layer covering at least part of the fire extinguishing agent. Since the self-extinguishing layer includes fire extinguishing agent-carrying particles that include a fire extinguishing agent and a resin layer covering at least part of the fire extinguishing agent, ignition due to thermal runaway or the like can be suppressed, and for example, the maximum heat generation temperature of a secondary battery cell adjacent to, for example, a secondary battery cell that has undergone thermal runaway can be reduced, and a heat generation start time can be delayed.

The fire-extinguishing sheet may be disposed inside or outside a battery packaging material, or may be disposed in a gap between members that can generate heat, for example, between secondary batteries. By disposing the fire-extinguishing sheet in a gap between members that can generate heat, fire spread or the like to a member adjacent to a member that has generated heat can be suppressed.

The fire-extinguishing sheet can be applied to a member that can cause a fire due to high temperature. For example, the fire-extinguishing sheet may be applied to a home appliance, a secondary battery such as a lithium ion secondary battery, an automobile component, or the like.

(Substrate Layer)

The material of the substrate layer in the flame retardant coating material or the fire-extinguishing sheet is not particularly limited, and examples thereof include metal materials such as aluminum and copper, polyolefin, polyester, polyphenylene sulfide (PPS), polyether ether ketone (PEEK), polyamideimide (PAI), and resin materials such as a fluorine element-containing resin such as polytetrafluoroethylene (PTFE), an acrylic resin, a silicone resin, a styrene-based resin, an ethylene vinyl alcohol-based resin, a polylactic acid resin, and a vinyl chloride-based resin.

The substrate layer may contain only one type of material, or may contain two or more types of materials. The substrate layer may be a layer containing a metal material, a layer containing a resin material, or a layer containing a metal material and a resin material.

Examples of the polyolefin include homopolymers or copolymers of an $\alpha$-olefin such as ethylene, propylene, 1-butene, 1-hexene, 4-methyl-1-pentene, 3-methyl-1-pentene, or 3-methyl-1-butene; copolymers of an $\alpha$-olefin with another copolymerizable monomer, for example styrene, acrylonitrile, vinyl chloride, vinyl acetate, an acrylic acid ester, a methacrylic acid ester, or the like; two or more types of these polymers, a blend of such a polymer and another thermoplastic resin, a block copolymer, and a graft copolymer. Above all, the polyolefin is preferably polypropylene or polyethylene.

Examples of the polyester include polyethylene terephthalate, polybutylene terephthalate, and polyethylene naphthalate.

The substrate layer may contain a flame retardant. Examples of the flame retardant that can be contained in the substrate layer include a halogen-based flame retardant and an inorganic flame retardant (such as alumina, magnesium hydroxide, or antimony trioxide).

When the substrate layer contains a flame retardant, the substrate layer may be formed of a composition in which the flame retardant is mixed with the above-described resin material included in the substrate layer, or may be a laminated body in which a flame retardant layer containing a flame retardant is layered on a layer of a resin material.

As the flame retardant contained in the substrate layer, one type may be used singly or two or more types may be used in combination.

The thickness of the substrate layer is not particularly limited, and may be, for example, from 100 $\mu$m to 300 $\mu$m, from 150 $\mu$m to 250 $\mu$m, or from 150 $\mu$m to 200 $\mu$m.

(Self-Extinguishing Layer)

The fire-extinguishing sheet of the disclosure includes a self-extinguishing layer including flame retardant-containing particles or fire extinguishing agent-carrying particles. As the flame retardant-containing particles or the fire extinguishing agent-carrying particles, one type may be used singly or two or more types may be used in combination.

The thickness of the self-extinguishing layer is not particularly limited, and may be, for example, from 100 μm to 300 μm, from 150 μm to 250 μm, or from 150 μm to 200 μm.

The content of the flame retardant-containing particles or the fire extinguishing agent-carrying particles may be from 30 mass% to 85 mass%, from 50 mass% to 80 mass%, or from 55 mass% to 70 mass% with respect to the total amount of the self-extinguishing layer.

<Fire Extinguishing Agent-Carrying Particle>

The self-extinguishing layer may include fire extinguishing agent-carrying particles that include a fire extinguishing agent and a resin layer covering at least part of the fire extinguishing agent.

The fire extinguishing agent-carrying particles are particles having a form in which at least part of the fire extinguishing agent is covered with a resin layer.

As the fire extinguishing agent contained in the fire extinguishing agent-carrying particles, one type may be used singly or two or more types may be used in combination.

The type of the fire extinguishing agent contained in the self-extinguishing layer is not particularly limited.

Examples of the fire extinguishing agent include phosphorus-based flame retardants such as guanidine phosphate, melamine polyphosphate, phosphoric trichloride, reaction products with 4,4'-isopropylidenediphenol and phenol (for example, ADK STAB FP-600), phosphoric acid esters, phosphoric trichloride, a polymer with 1,3-benzenediol, phenyl esters (for example, ADK STAB PFR), phosphoric acid, and mixed esters with [1,1'-biphenyl]-4,4'-diol and phenol (for example, ADK STAB FP-900L); antimony trioxide; bromine-based flame retardants such as ethylene bispentabromobenzene, 2,3-dibromopropyl ether, triallyl isocyanate hexabromide, bis[3,5-dibromo-4-(2,3-dibromopropoxy)phenyl] sulfone, and ethylene bispentabromobenzene/antimony trioxide; potassium perfluorobutanesulfonates; and inorganic flame retardants such as silicon carbide, spherical alumina, special carbon fibers, and titanium borate. Above all, the fire extinguishing agent preferably contains the above-described phosphorus-based flame retardant. Since the phosphorus-based flame retardant has no boiling point or has a high boiling point, a treatment or the like for suppressing volatilization of the fire extinguishing agent is unnecessary when a resin material is polymerized to prepare the fire extinguishing agent-carrying particles, and the polymerization method of the resin material is less likely to be limited.

As the phosphorus-based flame retardant, one type may be used singly or two or more types may be used in combination.

The content of the phosphorus-based flame retardant may be from 50 mass% to 100 mass%, from 60 mass% to 100 mass%, or from 80 mass% to 100 mass% with respect to the total amount of the fire extinguishing agent.

The resin layer covering at least part of the fire extinguishing agent is preferably a layer formed by polymerizing two or more types of monomers (A'). The resin layer may be in a form that includes one core portion containing a fire extinguishing agent and covers at least part of the one core portion, or may be in a form that includes a plurality of core portions containing a fire extinguishing agent and covers at least some of the plurality of core portions. The core portion may be entirely covered with the resin layer, or partially covered with the resin layer and the rest thereof may be exposed from the resin layer.

The elution rate of the resin layer in the electrolytic solution is preferably 40 mass% or less, more preferably 30 mass% or less, still more preferably 25 mass% or less, still more preferably 20 mass% or less, still more preferably 15 mass% or less, still more preferably 10 mass% or less, still more preferably 5 mass% or less, and still more preferably 1 mass% or less.

The lower limit of the elution rate of the resin layer in the electrolytic solution is not particularly limited as long as it is 0 mass% or more.

The elution rate of the resin layer in the electrolytic solution can be determined in the same manner as the elution rate of the resin layer (D) in the electrolytic solution described above.

The monomer (A') that can be used for formation of the resin layer is a monomer having a polymerizable unsaturated double bond. The monomer (A') preferably contains a monomer (1') capable of dissolving a fire extinguishing agent (preferably a phosphorus-based flame retardant), and may contain or need not contain a monomer other than the monomer (1'). Examples of the monomer other than the monomer (1') include a monomer (2) having an acidic group, and a monomer (3) having a polymerizable unsaturated double bond other than the monomer (1') and the monomer (2).

(Monomer (1'))

The monomer (1') is preferably a monomer component capable of dissolving a fire extinguishing agent (preferably a phosphorus-based flame retardant), and preferably further contains one or more (preferably one) polymerizable unsaturated double bonds. The monomer (1') may be similar to the monomer (1) described later.

As the monomer (1'), one type may be used singly or two or more types may be used in combination.

The monomer (1') is preferably at least one type selected from the group consisting of acrylonitrile, methyl methacrylate, butyl methacrylate, and styrene. The monomer (1') preferably contains at least one type selected from the group consisting of acrylonitrile and methyl methacrylate.

The content of the monomer (1') may be 60 mass% or more but less than 99 mass%, from 65 mass% to 97 mass%, or from 70 mass% to 95 mass% with respect to the total amount of the monomer (A').

When the monomer (1') contains at least one type selected from the group consisting of acrylonitrile and methyl methacrylate, the total content of acrylonitrile and methyl methacrylate is preferably from 50 mass% to 100 mass%, more preferably from 80 mass% to 100 mass%, and still more preferably from 90 mass% to 100 mass% with respect to the total amount of the monomer (1'). As a result, the elution rate in the electrolytic solution can be further suppressed, and the fire extinguishing agent-carrying particles tend to be easily formed.

The monomer (1') preferably contains acrylonitrile. The content of acrylonitrile in the monomer (1') is preferably from 50 mass% to 100 mass%, more preferably from 80 mass% to 100 mass%, and still more preferably from 90 mass% to 100 mass% with respect to the total amount of the monomer (1').

(Monomer (2))

The monomer (A') may contain or need not contain the monomer (2) having an acidic group. That is, in the monomer (A'), the monomer (2) is an optional component.

As the monomer (2), one type may be used singly or two or more types may be used in combination.

Preferred examples of the monomer (2) that can be contained in the monomer (A') are similar to the preferred examples of the monomer (2) that can be contained in the monomer (A) described above.

The content of the monomer (2) is preferably from 0 mass% to 10 mass%, more preferably from 1 mass% to 5 mass%, and still more preferably from 3 mass% to 5 mass% with respect to the total amount of the monomer (A').

(Monomer (3))

The monomer (A') may contain or need not contain the monomer (3) having a polymerizable unsaturated double bond other than the monomer (1') and the monomer (2). That is, in the monomer (A'), the monomer (3) is an optional component.

As the monomer (3), one type may be used singly or two or more types may be used in combination.

Preferred examples of the monomer (3) that can be contained in the monomer (A') are similar to the preferred examples of the monomer (3) that can be contained in the monomer (A) described above.

When the monomer (A') contains the monomer (3), the content of the monomer (3) is preferably from 1.1 mass% to 25 mass%, more preferably from 1.5 mass% to 20 mass%, and still more preferably from 2 mass% to 10 mass% with respect to the total amount of the monomer (A').

The content of the fire extinguishing agent-carrying particles may be from 30 mass% to 85 mass%, from 50 mass% to 80 mass%, or from 55 mass% to 70 mass% with respect to the total amount of the self-extinguishing layer.

The content of the fire extinguishing agent contained in the fire extinguishing agent-carrying particles may be from 20 mass% to 80 mass%, from 30 mass% to 70 mass%, or from 40 mass% to 60 mass% with respect to the total amount of the fire extinguishing agent-carrying particles.

The content of the resin layer contained in the fire extinguishing agent-carrying particles may be from 20 mass% to 80 mass%, from 30 mass% to 70 mass%, or from 40 mass% to 60 mass% with respect to the total amount of the fire extinguishing agent-carrying particles.

The average particle diameter of the fire extinguishing agent-carrying particles may be 0.1 $\mu$m or more, or 0.5 $\mu$m or more. When the average particle diameter of the fire extinguishing agent-carrying particles is 0.1 $\mu$m or more, the number of adhesion points with a particulate binder increases, the fire extinguishing agent-carrying particles are less likely to break under normal conditions, and the fire-extinguishing sheet is easily deformed along the shape of a member to which the fire-extinguishing sheet is applied (for example, a secondary battery).

The average particle diameter of the fire extinguishing agent-carrying particles may be 6 $\mu$m or less, or 5 $\mu$m or less. When the average particle diameter of the fire extinguishing agent-carrying particles is 6 $\mu$m or less, the number of adhesion points with a particulate binder does not become excessive, and the fire extinguishing agent is easily released from the fire extinguishing agent-carrying particles when abnormal heat generation or the like occurs.

The average particle diameter of the fire extinguishing agent-carrying particles can be determined by measuring the particle diameter with a particle diameter analyzer (manufactured by MicrotracBEL Corp., MT3300EX II).

It is preferable that the fire extinguishing agent-carrying particles have no structural deformation of the resin layer at 100°C or lower. The structural deformation of the resin layer means that the fire extinguishing agent is released from the fire extinguishing agent-carrying particles to the outside of the fire-extinguishing sheet due to chemical alteration of the resin layer. Since there is no structural deformation of the resin layer at 100°C or lower, release of the fire extinguishing agent from the fire extinguishing agent-carrying particles to the outside of the fire-extinguishing sheet is suppressed in a usage temperature range (for example, from 45°C to 80°C) of a secondary battery.

[Method of Releasing Fire Extinguishing Agent]

The method of releasing a fire extinguishing agent of the disclosure includes a step of allowing fire extinguishing agent-carrying particles included in a fire-extinguishing sheet to undergo morphological change at a temperature between 110°C and 180°C (step 1), and a step of releasing a fire extinguishing agent from the fire extinguishing agent-carrying particles (step 2). As a result, when abnormal heat generation or the like occurs, the fire extinguishing agent is released from the fire extinguishing agent-carrying particles, and an ignition phenomenon or the like of the secondary battery or the like is suppressed. The step 1 and the step 2 may proceed simultaneously or partially overlap with each other, and for example, the fire extinguishing agent may be released from the fire extinguishing agent-carrying particles while the fire extinguishing agent-carrying particles are undergoing morphological change.

A method of producing fire extinguishing agent-carrying particles is a method including a step of preparing a mixed liquid containing a monomer (A') and a fire extinguishing agent, and a step of forming a resin layer by polymerizing the monomer (A') in the mixed liquid.

The method of producing fire extinguishing agent-carrying particles includes a step (preparation step) of preparing a mixed liquid containing a monomer (A') and a fire extinguishing agent. In this step, the fire extinguishing agent may be dissolved in at least part (preferably, a monomer (1')) of two or more types of monomers (A').

The method includes a step (forming step) of forming a resin layer by polymerizing the monomer (A') in the mixed liquid. In the forming step, for example, the monomer (A') may be polymerized by heating the composition under conditions from 50°C to 90°C (75°C in one example) and from 30 minutes to 5 hours (2 hours in one example). The mixture may contain the above-described polymerization initiator such as an azo-based polymerization initiator or a peroxide-based polymerization initiator. The pressure when the monomer (A') is polymerized is not particularly limited, and may be a normal pressure of from about 0.05 MPa to 0.15 MPa.

In the forming step, the monomer (A') may be polymerized by suspension polymerization. For example, the resin layer may be formed by stirring the mixed liquid and an aqueous liquid containing a solvent such as water, dispersing the mixed liquid in the aqueous liquid, and polymerizing the monomer (A') in the mixed liquid. By performing suspension polymerization, it is easy to control the particle diameter of the fire extinguishing agent-carrying particles, and particles having small variations in particle diameter, shape, and the like tend to be easily formed.

(Water-Soluble Resin)

The self-extinguishing layer preferably further contains a water-soluble resin from the viewpoint of processability. Examples of the water-soluble resin include a resin having a hydroxy group. Examples of the water-soluble resin include polyvinyl alcohol-based resins such as polyvinyl alcohol (PVA), cellulose-based resins such as hydroxyethyl cellulose (HEC), carboxymethyl cellulose (CMC), hydroxypropyl cellulose (HPC), hydroxyethyl methyl cellulose, and hydroxypropyl methyl cellulose, and resins having an ether bond such as a chitin, a chitosan, starch, polyethylene oxide (PEO), polypropylene oxide (PPO), polyethylene glycol (PEG), and polyvinyl ether (PVE).

As the water-soluble resin, one type may be used singly or two or more types may be used in combination.

When the self-extinguishing layer contains a water-soluble resin, the content of the water-soluble resin may be from 0.5 mass% to 10 mass%, from 1 mass% to 8 mass%, or from 1 mass% to 5 mass% with respect to the total amount of the self-extinguishing layer.

(Binder)

The self-extinguishing layer preferably further contains a binder from the viewpoint of adhesion of the flame retardant-containing particles, the fire extinguishing agent-carrying particles, and the like. Examples of the binder include a styrene-butadiene copolymer, polyvinylidene fluoride (PVDF), polytetrafluoroethylene (PTFE), an acrylic resin, a urethane resin, and a water-soluble resin. The above-described water-soluble resin may also serve as a binder.

As the binder, one type may be used singly or two or more types may be used in combination.

The binder may be in a particulate form. Since the flame retardant-containing particles or the fire extinguishing agent-carrying particles and the binder that form the self-extinguishing layer are in a particulate form, and the self-extinguishing layer is formed of an aggregate of particles, the adhesion area between adjacent particles in the self-extinguishing layer becomes small, and adhesion between adjacent particles is easily broken when abnormal heat generation or the like occurs. In addition, when abnormal heat generation or the like occurs, in the flame retardant-containing particles or the fire extinguishing agent-carrying particles, the resin layer covering at least part of the fire extinguishing agent is likely to melt, and the fire extinguishing agent tends to be released at an early stage from the flame retardant-containing particles or the fire extinguishing agent-carrying particles dispersed in the self-extinguishing layer to suppress ignition.

When the self-extinguishing layer contains a binder, the content of the binder may be from 1 mass% to 15 mass%, from 2 mass% to 12 mass%, or from 4 mass% to 10 mass% with respect to the total amount of the self-extinguishing layer.

(Inorganic Filler)

The self-extinguishing layer preferably further contains an inorganic filler from the viewpoint of processability and improvement of performance of the fire-extinguishing sheet. Examples of the inorganic filler include alumina, magnesium hydroxide, silica, aluminum hydroxide, magnesium oxide, zirconium oxide, titanium oxide, aluminum nitride, boron nitride, and graphite.

As the inorganic filler, one type may be used singly or two or more types may be used in combination.

When the self-extinguishing layer contains an inorganic filler, the content of the inorganic filler may be from 3 mass% to 40 mass%, from 5 mass% to 35 mass%, or from 15 mass% to 30 mass% with respect to the total amount of the self-extinguishing layer.

The content of the fire extinguishing agent other than the flame retardant-containing particles of the disclosure may be from 0 mass% to 15 mass%, from 0 mass% to 10 mass%, or from 0 mass% to 5 mass% with respect to the total amount of the self-extinguishing layer. When the content of the fire extinguishing agent other than the flame retardant-containing particles is 15 mass% or less with respect to the total amount of the self-extinguishing layer, it is possible to obtain a fire-extinguishing sheet that can reduce the maximum heat generation temperature of a secondary battery cell adjacent to, for example, a secondary battery cell having undergone thermal runaway, and that can delay the heat generation start time.

[Method of Producing Fire-Extinguishing Sheet]

The method of producing a fire-extinguishing sheet of the disclosure includes a step of applying an aqueous composition including flame retardant-containing particles or fire extinguishing agent-carrying particles that include a fire extinguishing agent and a resin layer covering at least part of the fire extinguishing agent to a substrate layer.

In the production method of the disclosure, the above-described aqueous composition is prepared, and the prepared aqueous composition is applied to the substrate layer. The aqueous composition includes the above-described flame retardant-containing particles or fire extinguishing agent-carrying particles and water, and if necessary, at least one of a water-soluble resin, a binder, or an inorganic filler, and may further contain other components (a surfactant, a fire extinguishing agent other than the flame retardant-containing particles or the fire extinguishing agent-carrying particles (for example, a fire extinguishing agent not covered with a resin layer), other components that are not dissolved in the electrolytic solution, or the like).

Examples of a method of preparing the aqueous composition include a method in which powder components (flame retardant-containing particles or fire extinguishing agent-carrying particles, a water-soluble resin, a binder, an inorganic filler, and the like) are stirred and mixed, then water as a solvent is added to disperse each powder component in water thereby preparing an aqueous composition.

The content of the flame retardant-containing particles or the fire extinguishing agent-carrying particles in the aqueous composition may be from 30 mass% to 85 mass%, from 50 mass% to 80 mass%, or from 55 mass% to 70 mass% with respect to all components excluding water from the aqueous composition.

When the aqueous composition contains a water-soluble resin, the content of the water-soluble resin may be from 0.5 mass% to 10 mass%, from 1 mass% to 8 mass%, or from 1 mass% to 5 mass% with respect to all components excluding water from the aqueous composition.

When the aqueous composition contains a binder, the content of the binder may be from 1 mass% to 15 mass%, from 2 mass% to 12 mass%, or from 4 mass% to 10 mass% with respect to all components excluding water from the aqueous composition.

When the aqueous composition contains an inorganic filler, the content of the inorganic filler may be from 3 mass% to 40 mass%, from 5 mass% to 35 mass%, or from 15 mass% to 30 mass% with respect to all components excluding water from the aqueous composition.

As a method of applying the aqueous composition to the substrate layer is not particularly limited, and a conventionally known coating method can be adopted. After the aqueous composition is applied to the substrate layer, the aqueous composition may be dried as necessary.

[Laminated Body]

The laminated body of the disclosure includes the flame retardant-containing particles of the disclosure. The laminated body of the disclosure is not particularly limited as long as it includes two or more layers and includes at least one layer including the flame retardant-containing particles of the disclosure. For example, the above-described flame retardant coating material may be applied to a surface of a substrate or a member, or the like, and heated, dried, or the like as necessary to form a layer including the flame retardant-containing particles of the disclosure on the surface of the substrate or the member, or the like, thereby forming a laminated body.

The flame retardant-containing particles, the flame retardant coating material, the fire-extinguishing sheet, and the laminated body of the disclosure may be used for imparting fire resistance to a secondary battery.

[Secondary Battery]

A secondary battery may include a positive electrode, a negative electrode, a separator disposed between the positive electrode and the negative electrode, and an electrolytic solution. For example, a laminated body including the flame retardant-containing particles of the disclosure may be used as an outermost layer separator of a secondary battery, or may be used as a packaging material of a secondary battery. The laminated body including the flame retardant-containing particles of the disclosure may be disposed so that at least part thereof is in contact with the electrolytic solution in a secondary battery. Examples of the secondary battery include a lithium ion secondary battery and a magnesium ion secondary battery.

The secondary battery may include the fire-extinguishing sheet of the disclosure, a positive electrode, a negative electrode, a separator disposed between the positive electrode and the negative electrode, and a nonaqueous electrolytic solution, and the fire-extinguishing sheet may be disposed inside or outside a battery packaging material.

When the fire-extinguishing sheet is disposed inside the battery packaging material, it is preferable that the self-extinguishing layer is located on the electrode side, and the substrate layer is located on the opposite side to the electrode side.

Even when the self-extinguishing layer is located on the electrode side, the charge-discharge characteristics and the like of the secondary battery tend to be maintained.

Further, the positive electrode, the negative electrode, the separator disposed between the positive electrode and the negative electrode, and the nonaqueous electrolytic solution may be housed in a battery packaging material in a state where the periphery thereof is wrapped by the fire-extinguishing sheet. In addition, the positive electrode, the negative electrode, and the separator may be formed by stacking or winding.

As the positive electrode, the negative electrode, and the separator in the secondary battery, conventionally known members can be used.

For example, the positive electrode is usually formed of a positive electrode active material and a positive electrode current collector, and includes a conduction aid, a binder, and the like if necessary. The positive electrode active material is not particularly limited, and a generally known material can be used, and examples thereof include lithium-containing composite oxides such as lithium cobalt oxide, lithium nickel oxide, lithium manganese oxide, a spinel-type lithium composite oxide, and lithium titanate.

For example, the negative electrode is usually formed of a negative electrode active material and a negative electrode current collector, and includes a conduction aid, a binder, and the like if necessary. The negative electrode active material is not particularly limited, and generally known materials can be used, and examples thereof include carbon materials such as graphite and hard carbon, Si, and Si alloys.

The electrolytic solution is preferably a nonaqueous electrolytic solution containing an electrolyte and a nonaqueous solvent.

Examples of the electrolyte include Li electrolytes such as $LiPF_6$, $LiBF_4$, $LiN(SO_2CF_3)_2$, and $LiN(SO_2CF_2CF_3)_2$.

Examples of the nonaqueous solvent include cyclic carbonates, fluorine-containing cyclic carbonates, chain carbonates, fluorine-containing chain carbonates, aliphatic carboxylic acid esters, fluorine-containing aliphatic carboxylic acid esters, $\gamma$-lactones, fluorine-containing $\gamma$-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, and dimethyl sulfoxide phosphoric acid. As the nonaqueous solvent, one type may be used singly or two or more types may be used in combination.

Examples of the cyclic carbonates include ethylene carbonate (EC), propylene carbonate (PC), and butylene carbonate (BC).

Examples of the fluorine-containing cyclic carbonates include fluoroethylene carbonate (FEC), difluoroethylene carbonate (DFEC), and trifluoropropylene carbonate.

Examples of the chain carbonates include dimethyl carbonate (DMC), diethyl carbonate (DEC), ethyl methyl carbonate (EMC), methyl propyl carbonate (MPC), ethyl propyl carbonate (EPC), and dipropyl carbonate (DPC).

Examples of the fluorine-containing chain carbonates include methyl 2,2,2-trifluoroethyl carbonate.

Examples of the aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, and ethyl trimethylbutyrate.

Examples of the fluorine-containing aliphatic carboxylic acid esters include methyl difluoroacetate, methyl 3,3,3-trifluoropropionate, ethyl difluoroacetate, and 2,2,2-trifluoroethyl acetate.

Examples of the $\gamma$-lactones include $\gamma$-butyrolactone and $\gamma$-valerolactone.

Examples of the cyclic ethers include tetrahydrofuran, 2-methyltetrahydrofuran, tetrahydropyran, 1,3-dioxolane, 4-methyl-1,3-dioxolane, 1,3-dioxane, and 1,4-dioxane.

Examples of the chain ethers include 1,2-ethoxyethane (DEE), ethoxymethoxyethane (EME), diethyl ether, 1,2-dimethoxyethane, and 1,2-dibutoxyethane.

Examples of the fluorine-containing chain ethers include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$.

Examples of the nitriles include acetonitrile, glutaronitrile, adiponitrile, methoxyacetonitrile, and 3-methoxypropionitrile.

Examples of the amides include N,N-dimethylformamide.

Examples of the lactams include N-methylpyrrolidinone, N-methyloxazolidinone, and N,N'-dimethylimidazolidinone.

The content of the nonaqueous solvent is preferably from 60 mass% to 99 mass%, more preferably from 70 mass% to 97 mass%, and still more preferably from 90 mass% to 97 mass% with respect to the total amount of the nonaqueous electrolytic solution.

[Resin Composition]

The resin composition of the disclosure is a polymerizable composition containing 70 mass% or more but less than 99 mass% of a monomer (1) capable of dissolving a phosphorus-based flame retardant (B), in which a content of a monomer (2) having an acidic group is from 0 mass% to 10 mass%, and a content of a monomer (3) other than the monomer (1) and the monomer (2) is from 0 mass% to 25 mass%, and a proportion of methyl methacrylate contained in the monomer (1) is 50 mass% or less with respect to a total amount of the monomer (1). The resin composition of the disclosure is a composition used for forming a resin layer.

The resin composition of the disclosure may be used for forming the resin layer (D) covering at least part of the phosphorus-based flame retardant (B), or may be used for forming the above-described flame retardant-containing particles by combining with the phosphorus-based flame retardant (B).

The flame retardant-containing particles may be formed using the resin composition of the disclosure. For example, the flame retardant-containing particle of the disclosure may be a particle including the phosphorus-based flame retardant (B) and the resin layer (D) that is formed from the resin composition of the disclosure and that covers at least part of the phosphorus-based flame retardant (B). The flame retardant-containing particle of the disclosure may satisfy or need not satisfy an elution rate of the resin layer (D) in the electrolytic solution of 40 mass% or less.

(Monomer (1))

The resin composition of the disclosure contains 70 mass% or more but less than 99 mass% of the monomer (1) capable of dissolving the phosphorus-based flame retardant (B), and the proportion of methyl methacrylate contained in the monomer (1) is 50 mass% or less with respect to the total amount of the monomer (1). The monomer (1) may be a monomer component capable of dissolving the phosphorus-based flame retardant (B), and preferably further contains one or more (preferably one) polymerizable unsaturated double bonds.

As the monomer (1), one type may be used singly or two or more types may be used in combination.

The monomer (1) is preferably at least one type selected from the group consisting of acrylonitrile, methyl methacrylate, butyl methacrylate, and styrene. The monomer (1) preferably contains at least one type selected from the group consisting of acrylonitrile and methyl methacrylate.

From the viewpoint of easily forming a resin layer in which elution in an electrolytic solution is suppressed, the proportion of methyl methacrylate contained in the monomer (1) is 50 mass% or less, preferably 20 mass% or less, and more preferably 10 mass% or less with respect to the total amount of the monomer (1).

The content of the monomer (1) is 70 mass% or more but less than 99 mass% with respect to the total amount of the resin composition of the disclosure (or the total amount of the monomer components contained in the resin composition), and is preferably from 75 mass% to 97 mass%, and more preferably from 80 mass% to 95 mass% from the viewpoint that the elution rate in the electrolytic solution can be further suppressed and the flame retardant-containing particles are easily formed.

When the monomer (1) contains at least one type selected from the group consisting of acrylonitrile and methyl methacrylate, the total content of acrylonitrile and methyl methacrylate is preferably from 50 mass% to 100 mass%, more preferably from 80 mass% to 100 mass%, and still more preferably from 90 mass% to 100 mass% with respect to the total amount of the monomer (1). As a result, the elution rate in the electrolytic solution can be further suppressed, and the flame retardant-containing particles tend to be easily formed.

The monomer (1) preferably contains acrylonitrile. The content of acrylonitrile in the monomer (1) is preferably from 50 mass% to 100 mass%, more preferably from 80 mass% to 100 mass%, and still more preferably from 90 mass% to 100 mass% with respect to the total amount of the monomer (1).

(Monomer (2))

The resin composition of the disclosure may contain or need not contain the monomer (2) having an acidic group. That is, in the resin composition of the disclosure, the monomer (2) is an optional component.

As the monomer (2), one type may be used singly or two or more types may be used in combination.

Examples of the acidic group include a carboxylic acid group, a sulfonic acid group, and a phosphoric acid group.

The monomer (2) is preferably at least one type selected from the group consisting of methacrylic acid and acrylic acid.

The content of the monomer (2) is from 0 mass% to 10 mass%, preferably from 1 mass% to 8 mass%, more preferably from 1 mass% to 5 mass%, and still more preferably from 3 mass% to 5 mass% with respect to the total amount of the resin composition of the disclosure (or the total amount of the monomer components contained in the resin composition).

(Monomer (3))

The resin composition of the disclosure may contain or need not contain the monomer (3) other than the monomer (1) and the monomer (2). That is, in the resin composition of the disclosure, the monomer (3) is an optional component.

As the monomer (3), one type may be used singly or two or more types may be used in combination.

The monomer (3) is a monomer other than the monomer (1) and the monomer (2), and preferably contains one or two or more polymerizable unsaturated double bonds, and more preferably contains one polymerizable unsaturated double bond.

Examples of the monomer (3) include a (meth)acrylate compound and a vinyl compound other than the monomer (1) and the monomer (2).

Specific examples of the monomer (3) containing one polymerizable unsaturated double bond include methyl acrylate, butyl acrylate, 2-ethylhexyl acrylate, 2-hydroxyethyl methacrylate, and isobornyl methacrylate.

Specific examples of the monomer (3) containing two or more polymerizable unsaturated double bonds include divinylbenzene, divinylnaphthalene, ethylene glycol di(meth)acrylate, diethylene glycol di(meth)acrylate, polyethylene glycol di(meth)acrylate, propylene glycol di(meth)acrylate, dipropylene glycol di(meth)acrylate, polypropylene glycol di(meth)acrylate, polytetramethylene glycol di(meth)acrylate, tricyclodecanol di(meth)acrylate, trimethylolpropane (meth)acrylate, pentaerythritol tetra(meth)acrylate, dipentaerythritol penta(meth)acrylate, dipentaerythritol hexa(meth) acrylate, and methylenebis(meth)acrylamide.

The content of the monomer (3) is from 0 mass% to 25 mass%, preferably from 0 mass% to 20 mass%, and more preferably from 0 mass% to 10 mass% with respect to the total amount of the resin composition of the disclosure (or the total amount of the monomer components contained in the resin composition).

[Method of Producing Flame Retardant-Containing Particles]

The method of producing flame retardant-containing particles of the disclosure includes a step of preparing a mixed liquid containing the resin composition of the disclosure and the phosphorus-based flame retardant (B), and a step of forming the resin layer (D) by polymerizing a polymerizable monomer in the mixed liquid. Preferred conditions of the flame retardant-containing particles to be produced are similar to the preferred conditions of the above-described flame retardant-containing particles of the disclosure. For example, the flame retardant-containing particles to be produced may satisfy or need not satisfy an elution rate of the resin layer (D) in the electrolytic solution of 40 mass% or less.

The production method of the disclosure includes a step (preparation step) of preparing a mixed liquid containing the above-described resin composition of the disclosure and the phosphorus-based flame retardant (B). In the preparation step, a mixed liquid in which the above-described resin composition of the disclosure and the phosphorus-based flame retardant (B) are mixed may be prepared. In this step, the phosphorus-based flame retardant (B) may be dissolved in at least part (preferably the monomer (1)) of two or more types of monomers (A) contained in the above-described resin composition of the disclosure.

The production method of the disclosure includes a step (forming step) of forming the resin layer (D) by polymerizing a polymerizable monomer in the mixed liquid. In the forming step, for example, two or more types of monomers (A) may be polymerized by heating the composition under conditions from 40°C to 70°C (55°C in one example) and from 30 minutes to 5 hours (2 hours in one example). The mixture may contain the above-described polymerization initiator such as an azo-based polymerization initiator or a peroxide-based polymerization initiator. The pressure when two or more types of monomers (A) are polymerized is not particularly limited, and may be a normal pressure of from about 0.05 MPa to 0.15 MPa.

In the forming step, two or more types of monomers (A) may be polymerized by suspension polymerization. For example, the resin layer (D) may be formed by stirring the mixed liquid and an aqueous liquid containing a solvent such as water, dispersing the mixed liquid in the aqueous liquid, and polymerizing two or more types of monomers (A) in the mixed liquid. By performing suspension polymerization, it is easy to control the particle diameter of the flame retardant-containing particles, and particles having small variations in particle diameter, shape, and the like tend to be easily formed.

The flame retardant-containing particles obtained by the production method of the disclosure include the resin layer (D) formed by polymerizing two or more types of monomers (A). The resin layer (D) preferably covers at least part of the phosphorus-based flame retardant (B). The resin layer (D) may be in a form that includes one core portion formed of a flame retardant and covers at least part of the one core portion, or may be in a form that includes a plurality of core portions formed of a flame retardant and covers at least some of the plurality of core portions. The core portion may be entirely covered with the resin layer (D), or partially covered with the resin layer (D) and the rest thereof may be exposed from the resin layer (D).

Examples

Hereinafter, the disclosure will be described in more detail with reference to examples, but the invention of the disclosure is not limited only to these examples. In the following examples, the term "part(s)" means part(s) by mass.

<Preparation of Electrolytic Solution>

Ethylene carbonate, ethyl methyl carbonate, and diethyl carbonate were each placed in a flask in an amount of 100 parts and stirred with a magnetic stirrer to prepare a uniform electrolytic solution.

<Method of Calculating Elution Rate>

An emulsion solution of only a resin layer was prepared, dried at normal temperature for 24 hours, and then 0.5 parts of a sample dried at 100°C for 2 minutes was immersed in 10 parts of the electrolytic solution at normal temperature for 16 hours. After immersion, the electrolytic solution was filtered, and the residue obtained by drying the filtrate at 150°C for 3 hours was measured to calculate the elution amount in the electrolytic solution. The elution rate was calculated from the following formula from the elution amount in the electrolytic solution.

[Math. 2]

$$\text{Elution rate} = 100 - \frac{\text{Elution amount in electrolytic solution}}{0.5} \times 100$$

<Example 1>

An oil-phase mixed liquid and an aqueous solution each having the following formulation were prepared. V-65 means 2,2'-azobis(2,4-dimethylvaleronitrile).

The resulting oil-phase mixed liquid and aqueous solution were strongly stirred to obtain an emulsion. The entire amount of the obtained emulsion was charged into a separable flask equipped with a stirrer and a reflux condenser while washing with 393.5 parts of distilled water. After replacement with nitrogen gas, the temperature was raised to 55°C, and polymerization was completed over 2 hours with stirring. A dispersion of flame retardant-containing particles having a solid content of 30.0 mass% was obtained. The obtained dispersion had an average particle diameter of 1.0 μm.

(Oil-Phase Mixed Liquid)

Acrylonitrile: 88.6 parts
n-Butyl acrylate: 6.4 parts
Methacrylic acid: 5.0 parts
Heptane: 10.0 parts
V-65: 1.5 parts
ADK STAB FP-900L (manufactured by ADEKA CORPORATION): 100.0 parts

(Aqueous Solution)

POVAL PVA-210: 10.0 parts
Distilled water: 90.0 parts

<Example 2>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 89.5 parts
2-Ethylhexyl acrylate: 5.5 parts
Methacrylic acid: 5.0 parts
Heptane: 10.0 parts
V-65: 1.5 parts
ADK STAB FP-900L (manufactured by ADEKA CORPORATION): 100.0 parts

<Example 3>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 92.0 parts
2-Hydroxyethyl methacrylate: 3.0 parts
Methacrylic acid: 5.0 parts
Heptane: 10.0 parts
V-65: 1.5 parts
ADK STAB FP-900L (manufactured by ADEKA CORPORATION): 100.0 parts

<Example 4>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 95.0 parts
Methacrylic acid: 5.0 parts
Heptane : 10.0 parts
V-65: 1.5 parts
ADK STAB FP-900L (manufactured by ADEKA CORPORATION): 100.0 parts

<Example 5>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 95.0 parts
Acrylic acid: 5.0 parts
Heptane: 10.0 parts
V-65: 1.5 parts
ADK STAB FP-900L (manufactured by ADEKA CORPORATION): 100.0 parts

<Example 6>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 70.0 parts
n-Butyl acrylate: 25.0 parts
Methacrylic acid: 5.0 parts
Heptane: 10.0 parts
V-65: 1.5 parts
ADK STAB FP-900L (manufactured by ADEKA CORPORATION): 100.0 parts

<Example 7>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 64.9 parts
Methyl methacrylate: 5.9 parts

n-Butyl acrylate: 14.2 parts
Isobornyl methacrylate: 10.0 parts
Methacrylic acid: 5.0 parts
Heptane: 10.0 parts
V-65: 1.5 parts
ADK STAB FP-900L (manufactured by ADEKA CORPORATION): 100.0 parts

<Example 8>

An emulsion solution having a solid content of 30.0 mass% was obtained in the same manner as in Example 1 except that the oil-phase mixed liquid was changed to the following formulation. The obtained dispersion had an average particle diameter of 1.0 $\mu$m.

(Oil-Phase Mixed Liquid)

n-Butyl methacrylate: 95.0 parts
Methacrylic acid: 5.0 parts
Heptane: 10.0 parts
V-65: 1.5 parts
ADK STAB FP-900L (manufactured by ADEKA CORPORATION): 100.0 parts

<Comparative Example 1>

An emulsion solution having a solid content of 30.0 mass% was obtained in the same manner as in Example 1 except that the oil-phase mixed liquid was changed to the following formulation. The obtained dispersion had an average particle diameter of 1.0 $\mu$m.

(Oil-Phase Mixed Liquid)

Acrylonitrile: 33.2 parts
Methyl methacrylate: 37.8 parts
n-Butyl acrylate: 14.0 parts
Isobornyl methacrylate: 10.0 parts
Methacrylic acid: 5.0 parts
Heptane: 10.0 parts
V-65: 1.5 parts
ADK STAB FP-900L (manufactured by ADEKA CORPORATION): 100.0 parts

<Comparative Example 2>

An emulsion solution having a solid content of 30.0 mass% was obtained in the same manner as in Example 1 except that the oil-phase mixed liquid was changed to the following formulation. The obtained dispersion had an average particle diameter of 1.0 $\mu$m.

(Oil-Phase Mixed Liquid)

Acrylonitrile: 40.3 parts
Methyl methacrylate: 18.6 parts
n-Butyl acrylate: 16.1 parts
Isobornyl methacrylate: 20.0 parts
Methacrylic acid: 5.0 parts
Heptane: 10.0 parts

V-65: 1.5 parts
ADK STAB FP-900L (manufactured by ADEKA CORPORATION): 100.0 parts

<Comparative Example 3>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Acrylonitrile: 65.0 parts
n-Butyl acrylate: 30.0 parts
Methacrylic acid: 5.0 parts
Heptane: 10.0 parts
V-65: 1.5 parts
ADK STAB FP-900L (manufactured by ADEKA CORPORATION): 100.0 parts

<Comparative Example 4>

Polymerization was performed in the same manner as in Example 1 except that the oil-phase mixed liquid was changed to the following formulation, but an emulsion solution was not obtained and aggregation occurred.

(Oil-Phase Mixed Liquid)

Acrylonitrile: 99.0 parts
Methacrylic acid: 1.0 parts
Heptane: 10.0 parts
V-65: 1.5 parts
ADK STAB FP-900L (manufactured by ADEKA CORPORATION): 100.0 parts

<Comparative Example 5>

An emulsion solution having a solid content of 30.0 mass% was obtained in the same manner as in Example 1 except that the oil-phase mixed liquid was changed to the following formulation. The obtained dispersion had an average particle diameter of 1.0 μm.

(Oil-Phase Mixed Liquid)

Methyl acrylate: 100.0 parts
Heptane: 10.0 parts
V-65: 1.5 parts
ADK STAB FP-900L (manufactured by ADEKA CORPORATION): 100.0 parts

<Verification of Flame Retardant-Containing Particles>

With respect to the dispersions of flame retardant-containing particles obtained in Examples 1 to 8, it was verified by visual inspection that there was no separation or precipitation of the flame retardant-containing particles after polymerization of the monomers. This verified that the flame retardant was encapsulated in the flame retardant-containing particles. When the flame retardant is not encapsulated in the particles, a phenomenon such as "aggregation during polymerization", "separation or sedimentation of the flame retardant at the bottom of the flask or the like", or "adhesion of a viscous liquid to a glass plate surface after dropping the dispersion onto a glass plate and washing with water" may occur.

The formulations of the oil-phase mixed liquids of Examples 1 to 8 and Comparative Examples 1 to 5 are summarized in Table 1.

[Table 1]

| | Oil-phase mixed liquid | | | | | | | | | | | | | Aqueous solution | | Diluent | Elution rate |
|---|---|---|---|---|---|---|---|---|---|---|---|---|---|---|---|---|---|
| | AN | MMA | BMA | BA | 2EHA | HEMA | IBX | MA | Mac | Aac | Heptane | V-65 | FP-900L | PVA-210 | Distilled water | Distilled water | [%] |
| Example 1 | 88.6 | | | 6.4 | | | | | 5 | | 10 | 1.5 | 100 | 10 | 90 | 393.5 | 0 |
| Example 2 | 89.5 | | | | 5.5 | | | | 5 | | 10 | 1.5 | 100 | 10 | 90 | 393.5 | 0 |
| Example 3 | 92 | | | | | 3 | | | 5 | | 10 | 1.5 | 100 | 10 | 90 | 393.5 | 0 |
| Example 4 | 95 | | | | | | | | 5 | | 10 | 1.5 | 100 | 10 | 90 | 393.5 | 0 |
| Example 5 | 95 | | | | | | | | | 5 | 10 | 1.5 | 100 | 10 | 90 | 393.5 | 0 |
| Example 6 | 70 | | | 25 | | | | | 5 | | 10 | 1.5 | 100 | 10 | 90 | 393.5 | 18 |
| Example 7 | 64.9 | 5.9 | | 14.2 | | | 10 | | 5 | | 10 | 1.5 | 100 | 10 | 90 | 393.5 | 37 |
| Example 8 | | | 95 | | | | | | 5 | | 10 | 1.5 | 100 | 10 | 90 | 393.5 | 35 |
| Comparative Example 1 | 33.2 | 37.8 | | 14 | | | 10 | | 5 | | 10 | 1.5 | 100 | 10 | 90 | 393.5 | 91 |
| Comparative Example 2 | 40.3 | 18.6 | | 16.1 | | | 20 | | 5 | | 10 | 1.5 | 100 | 10 | 90 | 393.5 | 96 |
| Comparative Example 3 | 65 | | | 30 | | | | | 5 | | 10 | 1.5 | 100 | 10 | 90 | 393.5 | 54 |
| Comparative Example 4 | 99 | | | | | | | | 1 | | 10 | 1.5 | 100 | 10 | 90 | 393.5 | Aggregation |
| Comparative Example 5 | | | | | | | | 100 | | | 10 | 1.5 | 100 | 10 | 90 | 393.5 | 100 |

Abbreviations in Table 1 are as follows.

AN: acrylonitrile
MMA: methyl methacrylate
BMA: n-butyl methacrylate
BA: n-butyl acrylate
2EHA: 2-ethylhexyl acrylate
HEMA: 2-hydroxyethyl methacrylate
IBX: isobornyl methacrylate
MA: methyl acrylate
Mac: methacrylic acid
Aac: acrylic acid
V-65: 2,2'-azobis(2,4-dimethylvaleronitrile)
FP-900L: ADK STAB FP-900L manufactured by ADEKA CORPORATION
PVA-210: POVAL PVA-210 manufactured by KURARAY CO., LTD.

<Example 9>

After 65 mass% (in terms of solid content) of the flame retardant-containing particles obtained in Example 1 and 2 mass% of carboxymethyl cellulose (Daiichi Kogyo Seiyaku: CELOGEN 6) as a water-soluble resin were stirred using a planetary mixer, 30 mass% of alumina ($Al_2O_3$) as an inorganic filler was added and powder stirring was further performed. Thereafter, water as a solvent was added so that the mass ratio after drying was 45 mass%, the mixture was uniformly dispersed using a planetary mixer, and styrene-butadiene rubber (manufactured by Zeon Corporation: 2001) was added so that the mass ratio after drying was 4 mass% to prepare a self-extinguishing layer coating liquid.

<Preparation of Fire-Extinguishing Sheet>

The self-extinguishing layer coating liquid was applied to a 150 $\mu$m substrate using a bar coater so that the coating film thickness after drying was 150 $\mu$m or more, dried at 60°C for 30 minutes, and a self-extinguishing layer was formed on the substrate to produce a fire-extinguishing sheet. In Example 1, a substrate of PPS (polyphenylene sulfide) was used.

<Preparation of Negative Electrode>

A negative electrode slurry was prepared by mixing 95 parts by mass of graphite as a negative electrode active material, 1 part by mass of SBR (styrene-butadiene rubber) as a binder, 1 part by mass of carboxymethyl cellulose (CMC) as a thickener, and 100 parts by mass of water as a solvent.
Next, a copper foil (porous foil) having a thickness of 10 $\mu$m was used as a negative electrode current collector, and the negative electrode slurry was applied to the negative electrode current collector so that the mass of graphite after drying was 4 mg/cm$^2$, and dried to produce a negative electrode.

<Preparation of Positive Electrode>

A positive electrode slurry was prepared by mixing 90 parts by mass of activated carbon powder as a positive electrode active material, 6 parts by mass of polyacrylic acid (sodium neutralized salt of polyacrylic acid) as a binder, 15 parts by mass of acetylene black as a conduction aid, and 345 parts by mass of water as a solvent.
Next, an aluminum foil (porous foil) having a thickness of 15 $\mu$m as a positive electrode current collector was used, and the positive electrode slurry was applied to the positive electrode current collector so that the mass of activated carbon after drying was 4 mg/cm$^2$, and dried to produce a positive electrode.

<Preparation of Secondary Battery>

Each of the positive electrode and the negative electrode prepared as described above was punched out into a rectangle having a size of 60 mm × 40 mm, and a slurry coating film in a region of 20 mm × 40 mm on one end side of the long side was stripped off while leaving a 40 mm × 40 mm slurry coating film, and an electrode terminal was attached.
The entire battery element excluding one end to which the electrode terminal of the battery element was attached and the other end facing the one end was wrapped by the fire-extinguishing sheet, and the positive electrode, the separator, and the negative electrode were fixed.

<Examples 10 and 11>

A fire-extinguishing sheet was prepared in the same manner as in Example 9 except that the type and amount of each component used in <Preparation of Self-Extinguishing Layer Coating Liquid> in Example 9 were changed as shown in Table 2, and the formulation and thickness of the substrate and the thickness of the coating film after drying in <Preparation of Fire-Extinguishing Sheet> were changed as shown in Table 2, and a secondary battery was prepared.
PET means a substrate of polyethylene terephthalate.

<Comparative Example 6>

A fire-extinguishing sheet was prepared in the same manner as in Example 9 except that a fire extinguishing agent (MPP, melamine polyphosphate) was used instead of the flame retardant-containing particles in <Preparation of Self-Extinguishing Layer Coating Liquid> in Example 9 and the amount of each component used was changed as shown in Table 2, and a secondary battery was prepared.
In Comparative Example 6, DISPERSANT 5468 (SAN NOPCO, ammonium polycarboxylate) was used as a surfactant in <Preparation of Self- Extinguishing Layer Coating Liquid>.
PP/L-190 means a polypropylene substrate containing a mixture of a halogen-based flame retardant and antimony trioxide in amounts of from 10 mass% to 30 mass% with respect to the entire substrate.

<Comparative Examples 7 and 8>

A secondary battery was prepared in the same manner as in Example 9 except that the fire-extinguishing sheet was not used and 10 mass% or 20 mass% of ADK STAB FP-900L, which is a viscous liquid, was added to the electrolytic solution.

<Charge-Discharge Test>

A charge-discharge test was performed on the secondary batteries prepared in each example and Comparative Example 1 under the following conditions.
First, the secondary batteries were placed in a thermostatic chamber set at 25°C, charged to 4.2 V by CC-CV (constant current-constant voltage) under conditions of 0.2C, and the discharge capacity when discharged to 3.0 V under conditions of 0.2C was measured and defined as an initial capacity [Ah/g].
Next, the current and voltage during short-time discharge at charge amounts of 100%, 90%, and 50% were respectively measured, and this data was calculated as a DC resistance/$\Omega$, which is a slope when the horizontal axis represents current value/A and the vertical axis represents voltage/V, and this was defined as the internal resistance of the secondary battery.
Further, when the internal resistance was 3.00 $\Omega$ or less, the rate characteristic was regarded as favorable (evaluation A), and when the internal resistance exceeded 3.00 $\Omega$, the rate characteristic was regarded as poor (evaluation B).

<Chain Explosion Test>

After the 1 Ah secondary batteries prepared in each example and Comparative Example 1 were adjusted to SOC 100%, three secondary batteries were stacked, and both ends at 10 mm were fixed with Kapton Tape. The assembled secondary batteries were held between Bakelite plate jigs having a hole with a diameter of 5 mm at a central portion. A nail having a tip with a diameter of 3 mm processed into a triangular pyramid shape was used to cause the outermost one secondary battery to undergo thermal runaway at a nail penetration speed of 1 mm/min, and a heat generation start delay time and the maximum heat generation temperature of an adjacent secondary battery were measured. The results are shown in Table 2.

[Table 2]

| | | | Example 9 | Example 10 | Example 11 | Comparative Example 6 | Comparative Example 7 | Comparative Example 8 |
|---|---|---|---|---|---|---|---|---|
| Formulation | Flame retardant-containing particle | Particles of Example 1 | 58 | | | | | |
| | | Particles of Example 4 | | 58 | | | | |
| | | Particles of Example 5 | | | 58 | | | |
| | Inorganic filler | $Al_2O_3$ | 30 | 30 | 30 | 30 | | |
| | Fire extinguishing material | MPP | | | | 58 | | |
| | Surfactant | DISPERSANT 5468 | | | | 1 | | |
| | Binder | SBR | 10 | 10 | 10 | 10 | | |
| | Water-soluble resin | CMC | 2 | 2 | 2 | 1 | | |
| Substrate | Formulation | - | PET | PET | PET | PP/L-190 | - | - |
| | Thickness | μm | 150 | 150 | 150 | 150 | - | - |
| Coating film after drying | Thickness | μm | 150 | 150 | 150 | 150 | - | - |
| Electrolytic solution | Addition concentration of FP900L | mass% | 0 | 0 | 0 | 0 | 10 | 20 |
| Charge-discharge test | Initial capacity | Ah/g | 161.9 | 161.7 | 162.7 | 158.7 | 159.2 | 147 |
| | Internal resistance (DC-IR) | Ω | 2.38 | 2.49 | 2.35 | 3.15 | 3.15 | 4.91 |
| | Rate characteristic | - | A | A | A | B | B | B |
| Chain explosion test | Maximum heat generation temperature | °C | | | | 841 | | |
| | Heat generation start delay time | Sec. | | | | 0.5 | | |

EP 4 745 200 A1

As shown in Table 2, in each example, the results of the charge-discharge test were equal to or better than those of Comparative Example 1, and the internal resistance could be suppressed. The reason for this is presumed to be that by suppressing elution of the resin layer in the electrolytic solution, elution of the flame retardant is also suppressed, and thus battery characteristics are maintained.

The disclosure of Japanese Patent Application No. 2023-132173 filed on August 14, 2023 and Japanese Patent Application No. 2023-161502 filed on September 25, 2023 is incorporated herein by reference in its entirety.

All documents, patent applications, and technical standards described in this description are incorporated herein by reference to the same extent as if each individual document, patent application, and technical standard were specifically and individually indicated to be incorporated by reference.

## Claims

**1.** A flame retardant-containing particle, which is a particle (C) obtained by polymerizing two or more types of a monomer (A) having a polymerizable unsaturated double bond, in a composition containing the two or more types of the monomer (A) and a phosphorus-based flame retardant (B) dissolved in at least part of the two or more types of the monomer (A),

wherein the particle (C) includes a resin layer (D) formed by polymerizing the two or more types of the monomer (A), and an elution rate of the resin layer (D) in an electrolytic solution is 40 mass% or less.

**2.** The flame retardant-containing particle according to claim 1, wherein the resin layer (D) covers at least part of the phosphorus-based flame retardant (B).

**3.** A polymerizable resin composition, comprising from 70 mass% to less than 99 mass% of a monomer (1) in which a phosphorus-based flame retardant (B) is dissolvable, wherein:

a content of a monomer (2) having an acidic group is from 0 mass% to 10 mass%,
a content of a monomer (3) other than the monomer (1) and the monomer (2) is from 0 mass% to 25 mass%, and
a proportion of methyl methacrylate contained in the monomer (1) is 50 mass% or less with respect to a total amount of the monomer (1).

**4.** The resin composition according to claim 3, wherein the resin composition is used for forming a resin layer (D) covering at least part of the phosphorus-based flame retardant (B).

**5.** The resin composition according to claim 3 or 4, wherein the monomer (1) is at least one type selected from the group consisting of acrylonitrile, methyl methacrylate, butyl methacrylate, and styrene.

**6.** The resin composition according to any one of claims 3 to 5, wherein the monomer (2) is at least one type selected from the group consisting of methacrylic acid and acrylic acid.

**7.** The resin composition according to any one of claims 3 to 6, wherein the monomer (3) contains one polymerizable unsaturated double bond.

**8.** A flame retardant-containing particle, comprising:

the phosphorus-based flame retardant (B); and
a resin layer (D) that is formed from the resin composition according to any one of claims 3 to 7 and that covers at least part of the phosphorus-based flame retardant (B).

**9.** A flame retardant coating material, comprising the flame retardant-containing particle according to any one of claims 1, 2, and 8.

**10.** A laminated body, comprising the flame retardant-containing particle according to any one of claims 1, 2, and 8.

**11.** A method of producing a flame retardant-containing particle, the method comprising:

a step of preparing a mixed liquid containing the resin composition according to any one of claims 3 to 7 and the phosphorus-based flame retardant (B); and

a step of forming a resin layer (D) by polymerizing the monomer (A) in the mixed liquid.

12. The method of producing a flame retardant-containing particle according to claim 11, wherein the resin layer (D) covers at least part of the phosphorus-based flame retardant (B).

13. The method of producing a flame retardant-containing particle according to claim 11 or 12, wherein, in the step of forming a resin layer (D), the monomer (A) is subjected to suspension polymerization to form the resin layer (D).

14. A fire-extinguishing sheet, comprising:

   a substrate layer; and
   a self-extinguishing layer including fire extinguishing agent-carrying particles that include a fire extinguishing agent and a resin layer covering at least part of the fire extinguishing agent.

15. The fire-extinguishing sheet according to claim 14, wherein:

   the self-extinguishing layer further contains a water-soluble resin and a binder, and
   a content of the fire extinguishing agent-carrying particles is from 50 mass% to 80 mass% with respect to a total amount of the self-extinguishing layer.

16. The fire-extinguishing sheet according to claim 14 or 15, wherein the self-extinguishing layer further contains an inorganic filler.

17. The fire-extinguishing sheet according to any one of claims 14 to 16, wherein the fire extinguishing agent contains a phosphorus-based flame retardant.

18. The fire-extinguishing sheet according to any one of claims 14 to 17, wherein a content of the phosphorus-based flame retardant is from 50 mass% to 100 mass% with respect to a total amount of the fire extinguishing agent.

19. The fire-extinguishing sheet according to any one of claims 14 to 18, wherein the substrate layer contains at least one type of material selected from the group consisting of aluminum, copper, polyolefin, polyester, polyphenylene sulfide, polyether ether ketone, polyamideimide, and polytetrafluoroethylene.

20. The fire-extinguishing sheet according to any one of claims 14 to 19, wherein the substrate layer contains a flame retardant.

21. A secondary battery, comprising the fire-extinguishing sheet according to any one of claims 14 to 20, a positive electrode, a negative electrode, a separator disposed between the positive electrode and the negative electrode, and a nonaqueous electrolytic solution, wherein the fire-extinguishing sheet is disposed inside or outside a battery packaging material.

## INTERNATIONAL SEARCH REPORT

| International application No. |
| --- |
| **PCT/JP2024/028929** |

---

**A. CLASSIFICATION OF SUBJECT MATTER**

*C08L 101/14*(2006.01)i; *A62D 1/00*(2006.01)i; *C08F 2/44*(2006.01)i; *C08K 3/013*(2018.01)i; *C08K 5/49*(2006.01)i; *C08L 47/00*(2006.01)i; *C08L 101/00*(2006.01)i; *C09D 5/18*(2006.01)i; *C09D 7/65*(2018.01)i; *C09K 21/12*(2006.01)i; *H01M 50/121*(2021.01)i; *H01M 50/143*(2021.01)i; *H01M 50/202*(2021.01)i; *H01M 50/204*(2021.01)i; *H01M 50/293*(2021.01)i; *H01M 50/414*(2021.01)i; *H01M 50/443*(2021.01)i; *H01M 50/483*(2021.01)i; *H01M 50/486*(2021.01)i

FI: C08L101/14; C08F2/44 B; C09D5/18; C09D7/65; H01M50/121; H01M50/143; H01M50/414; H01M50/443 C; A62D1/00; H01M50/483; H01M50/486; H01M50/202 401F; H01M50/204 401F; H01M50/293; C08L101/00; C08K3/013; C08K5/49; C09K21/12; C08L47/00

According to International Patent Classification (IPC) or to both national classification and IPC

---

**B. FIELDS SEARCHED**

Minimum documentation searched (classification system followed by classification symbols)

C08L101/14; A62D1/00; C08F2/44; C08K3/013; C08K5/49; C08L47/00; C08L101/00; C09D5/18; C09D7/65; C09K21/12; H01M50/121; H01M50/143; H01M50/202; H01M50/204; H01M50/293; H01M50/414; H01M50/443; H01M50/483; H01M50/486

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

---

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-196831 A (AICA KOGYO CO., LTD.) 09 November 2015 (2015-11-09) claims, paragraphs [0001], [0033], [0041], examples | 1-2, 9-20 |
| X | JP 2003-527472 A (BAYER AKTIENGESELLSCHAFT) 16 September 2003 (2003-09-16) claims, paragraphs [0018], [0038], examples | 1-20 |
| X | JP 2004-162021 A (SANYO CHEMICAL INDUSTRIES, LTD.) 10 June 2004 (2004-06-10) claims, examples | 1-2, 9-14, 17-18 |

---

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 October 2024** | **29 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/028929** |

### C. DOCUMENTS CONSIDERED TO BE RELEVANT

| Category* | Citation of document, with indication, where appropriate, of the relevant passages | Relevant to claim No. |
| --- | --- | --- |
| X | JP 55-118988 A (MATSUMOTO YUSHI-SEIYAKU CO., LTD.) 12 September 1980 (1980-09-12) claims, page 2, upper right column, page 3, lower right column, examples | 1-14, 17-18 |
| X | JP 2010-31127 A (SEKISUI CHEMICAL CO., LTD.) 12 February 2010 (2010-02-12) claims, paragraphs [0002], [0033]-[0034], [0040] | 14-21 |

Form PCT/ISA/210 (second sheet) (July 2022)

## INTERNATIONAL SEARCH REPORT

| International application No. |
|---|
| **PCT/JP2024/028929** |

**Box No. III    Observations where unity of invention is lacking (Continuation of item 3 of first sheet)**

This International Searching Authority found multiple inventions in this international application, as follows:

Invention 1: The invention in claims 1-2 and claims 9-10 (the portions that refer back to claims 1-2)

Since claims 1-2 are deprived of novelty by documents 1 and 2, said claims do not have a special technical feature.
Therefore, the invention in claims 1-2 and claims 9-10, which refer back thereto, are classified as invention 1.

Invention 2: The invention in claims 3-8, 11-13, and claims 9-10 (the portions that refer back to claim 8)

The common technical feature shared by invention 1 and invention 2 is "a composition comprising a phosphorus-based flame retardant and monomers having unsaturated double bonds capable of dissolving the same." However, since said technical feature is set forth in documents 1 and 2, said feature is not a special technical feature.
In addition, claim 3 is not substantially identical to or similarly closely related to any of the claims classified as invention 1
Therefore, claim 3 cannot be classified as invention 1.

The invention in claims 3-8, 11-13, and claims 9-10 (the portions that refer back to claim 8) has the special technical feature of "a polymerizable resin composition comprising 70 mass% to less than 99 mass% of monomers (1) capable of dissolving a phosphorus-based flame retardant (B), wherein
the content of monomers (2) having acidic groups is 0-10 mass%,
the content of monomers (3) other than the monomers (1) and monomers (2) is 0-25 mass%, and
the proportion of methyl methacrylate included in the monomers (1) is 50 mass% or less with respect to the total amount of monomers (1)," and is thus classified as invention 2.

Invention 3: The invention in claims 14-21

Claim 14 cannot be said to share a same or corresponding technical feature with claim 1, which was classified as invention 1, or claim 3, which was classified as invention 2.
In addition, claim 14 is not substantially identical to or similarly closely related to any of the claims classified as invention 1 or 2.
Therefore, claim 14 cannot be classified as either invention 1 or invention 2.
Claims 14-21 have the special technical feature of "a fire-extinguishing sheet provided with a base material layer, and a self-extinguishing layer comprising fire-extinguishing agent-loaded particles comprising a fire extinguishing agent and a resin layer covering at least a portion of the fire-extinguishing agent," and are thus classified as invention 3.

Document 1: JP 2015-196831 A
Document 2: JP 2003-527472 A

Form PCT/ISA/210 (continuation of first sheet) (July 2022)

## INTERNATIONAL SEARCH REPORT

International application No.

**PCT/JP2024/028929**

**Box No. III    Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/028929**

| Patent document cited in search report | | | Publication date (day/month/year) | Patent family member(s) | | | Publication date (day/month/year) |
|---|---|---|---|---|---|---|---|
| JP | 2015-196831 | A | 09 November 2015 | (Family: none) | | | |
| JP | 2003-527472 | A | 16 September 2003 | US | 2003/0158303 | A1 | |
| | | | | claims, paragraphs [0037], [0085], examples | | | |
| | | | | EP | 1274785 | A1 | |
| | | | | CN | 1416450 | A | |
| | | | | KR | 10-0730673 | B1 | |
| JP | 2004-162021 | A | 10 June 2004 | (Family: none) | | | |
| JP | 55-118988 | A | 12 September 1980 | (Family: none) | | | |
| JP | 2010-31127 | A | 12 February 2010 | (Family: none) | | | |

Form PCT/ISA/210 (patent family annex) (July 2022)

**EP 4 745 200 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5374309 B
- JP 2021118847 A
- JP 2020130661 A
- JP 2023132173 A
- JP 2023161502 A